# EUROPÄISCHE PATENTSCHRIFT

(11) **EP 4 037 179 B1**
(45) Veröffentlichungstag und Bekanntmachung des Hinweises auf die Patenterteilung: **26.08.2026**
(21) Anmeldenummer: 22151965.5
(22) Anmeldetag: 18.01.2022
(51) Int. Cl.: H02P 6/182, H02P 23/28, H02P 6/18, H02P 6/15

(54) **ANSTEUERN EINES MINDESTENS ZWEIPHASIGEN BÜRSTENLOSEN MOTORS**
DRIVING AN AT LEAST TWO-PHASE BRUSHLESS MOTOR
COMMANDE D'UN MOTEUR SANS BALAI AU MOINS BIPHASÉ

(30) Priorität: 28.01.2021 BE 202105064
(43) Veröffentlichungstag der Anmeldung: 03.08.2022
(73) Patentinhaber: Miele & Cie. KG, 33332 Gütersloh (DE)
(72) Erfinder: Sammoud, Hafedh, 8090 Kelibia (TN); Rodehüser, Tobias, 59329 Wadersloh (DE)

(56) Entgegenhaltungen:
- EP-A1- 3 653 782
- DE-A1- 102017 121 829
- DE-A1- 102018 128 354
- US-A- 5 345 156

## Beschreibung

Die Erfindung betrifft ein Verfahren zum Ansteuern eines mindestens zweiphasigen bürstenlosen Motors gemäß dem Patentanspruch 1 und eine Ansteuerungsvorrichtung zum Ansteuern eines mindestens zweiphasigen bürstenlosen Motors gemäß dem Patentanspruch 3.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft. Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor verzichtet werden. Dies kann die zuvor genannten Nachteile vermeiden sowie insgesamt das Gewicht, den Bauraum und die Kosten derartiger permanenterregter Synchronmotoren geringhalten. Derartige permanenterregte Synchronmotoren mit einer schaltenden Elektronik werden daher üblicherweise auch als bürstenlose Motoren (Englisch: brushless direct current motor - kurz: BLDC-Motor) bezeichnet. Die Spulenstränge des Stators können über einen Vierquadrantensteller angesteuert werden. Die Elektronik zur Ansteuerung der Brücke ist ein geregelter Frequenzumrichter. Üblicherweise werden bürstenlose Motoren dreiphasig ausgebildet, da sie dann den Vorteil einer definierten Läuferstellung bei hoher Dynamik, hohem Drehmoment und hoher Effizienz aufweisen. Charakteristisch für bürstenlose Motoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen.

Die Steuerung der Kommutierung erfolgt in Abhängigkeit der aktuellen Rotorposition, welche über wenigstens einen Positionssensor zum Beispiel als Hall-Sensor erfasst werden kann, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann.

Mit anderen Worten ist ein bürstenloser Motor (BLDC-Motor) konstruktiv gesehen eine Drehfeldmaschine, welche keinen mechanischen Kommutator benötigt. Der Rotor beinhaltet einen oder mehrere Permanentmagnete. Durch die Wechselwirkung zwischen Statorfeld und Rotorfeld entsteht ein elektrisches Moment, das zu einer Rotation führen kann.

Zum Betrieb eines bürstenlosen Motors ist üblicherweise ein Motorumrichter notwendig. Der Motorumrichter beinhaltet üblicherweise im Wesentlichen ein Controller sowie Leistungshalbleiter zur Ansteuerung der Motorphasen. Außerdem ist üblicherweise ein Zwischenkreis vorhanden, aus dem der bürstenlose Motor gespeist wird.

Anders als die unter dem Begriff permanenterregte Synchron-Maschinen (PMSM) oder PMAC bekannten Motoren werden bei einem bürstenlosen Motor z.B. jeweils nur zwei Phasen von drei gleichzeitig bestromt und die dritte Phase ist stromlos. Die Auswahl der zu bestromenden Phasen ist von der Rotorlage abhängig. Der Übergang von einem Sektor bzw. Block zum nächsten wird auch "elektronische Kommutierung" genannt; deswegen auch die Bezeichnung "brushless" oder "elektronisch kommutiert". Die für die Kommutierung eines bürstenlosen Motors notwendige Information über die Rotorlage wird üblicherweise über einen Lagesensor wie beispielsweise Hall-Sensoren, Resolver oder Inkrementalgeber gemessen.

Aus dem Stand der Technik sind verschiedene Lösungen bekannt, die diese Kommutierung ohne einen Lagesensor erlauben. Der am meisten verbreitete Ansatz der sensorlosen Ansteuerung basiert darauf, die Rotorlage und die Kommutierungszeitpunkte durch Messung der induzierten Spannung in der inaktiven Phase zu ermitteln. Die Spannungspotenziale der Motorphase und des Motorsternpunkts werden über Spannungsteiler miteinander verglichen und der Nullübergang wird als Referenzzeitpunkt für die Kommutierung genommen.

Bei bürstenlosen Motoren, bei denen der Sternpunkt nicht physikalisch herausgeführt ist (etwa bei einer Dreieck-Schaltung), kann ein Sternpunkt künstlich durch drei in Stern geschaltete Widerstände nachgebildet werden. Das Spannungspotential des künstlichen Sternpunkts wird dann anschließend mit dem Spannungspotential der inaktiven Phase, zum Beispiel über einen Komparator, verglichen. Der Nulldurchgang dieser Differenz wird als Referenzzeitpunkt für die Kommutierung genommen.

Die Leistung eines bürstenlosen Motors wird, vereinfacht dargestellt, durch die Einschaltzeit der Halbleiter der Brücke bestimmt. Es wird für jede der Phasen eine Sollspannung berechnet. Diese Sollspannung wird durch die Höhe der Zwischenkreisspannung dividiert und somit die Einschaltzeit der Halbleiter berechnet. Ist die Sollspannung gleich der Zwischenkreisspannung, befindet sich der geregelte Frequenzumrichter in Vollaussteuerung, d.h. die Einschaltzeit beträgt 100% und die Leistung des bürstenlosen Motors kann nicht weiter erhöht werden. Somit ist die Leistung eines bürstenlosen Motors durch die Höhe der Zwischenkreisspannung begrenzt.

Dies ist insbesondere bei akkubetriebenen Geräten relevant, da die Zwischenkreisspannung mit sinkender Akkuspannung ebenfalls sinkt und somit im unteren Spannungsbereich des Akkus womöglich die volle Leistung des bürstenlosen Motors nicht mehr erreicht werden kann.

Bei einem optimal kommutierten bürstenlosen Motor sollen der Phasenstrom und die elektromotorische Kraft (EMK) in Phase sein, damit ein maximales Verhältnis der Leistung zum Stromeffektivwert erreicht wird. Dieses Kriterium bedeutet, dass der Nulldurchgang der EMK einer Phase etwa in der Mitte des stromlosen Intervalls erfolgen soll (unter der Annahme einer kleinen Verzögerung zwischen Spannung und Strom in der Phase). Bei der herkömmlichen Ansteuerung ist dies nicht ohne weiteres gegeben.

Die DE 10 2017 117 109 A1 beschreibt ein Verfahren zur Ansteuerung eines mindestens zweiphasigen bürstenlosen Motors, bevorzugt ohne Rotorlagesensor, umfassend:
- Bestromen von zwei Phasen, wobei die Spannung des Bestromens mittels PWM-Steuerung eingestellt wird;
- Ermitteln der induzierten Spannung einer nicht bestromten Phase;
- Anpassen der PWM-Frequenz, falls die induzierte Spannung ungleich Null ist, wobei
   ∘ die PWM-Frequenz erhöht wird, falls die induzierte Spannung bei positivem Nulldurchgang < 0; oder die induzierte Spannung bei negativem Nulldurchgang > 0; und
   ∘ die PWM-Frequenz verringert wird, falls die induzierte Spannung bei positivem Nulldurchgang > 0; oder die induzierte Spannung bei negativem Nulldurchgang < 0.

Somit wird die induzierte Spannung verwendet, um auf den Zustand der Kommutierung zu schließen. Abhängig davon kann über die Änderung der PWM-Frequenz entsprechend geregelt werden, um den Nulldurchgang der induzierten Spannung bzw. der elektromotorischen Kraft mit der Mitte des stromlosen Intervalls zu synchronisieren. Damit werden Phasenstrom und EMK in Phase gehalten und das Verhältnis der Leistung zum Stromeffektivwert wird maximiert.

Mit anderen Worten wird bei dem sensorlosen Regelungsverfahren der DE 10 2017 117 109 A1 der Kommutierungszeitpunkt bzw. die Ermittlung der Rotorposition durch Messung einer Phasenspannung und der Sternpunktspannung in der unbestromten Phase ermittelt und aus der Differenz dieser beiden Spannungen wird die induzierte Spannung berechnet. Im normalen Betrieb sollte die induzierte Spannung gleich Null sein, d.h. die Kommutierung erfolgt synchron zum Nulldurchgang der induzierten Spannung. Die Phasenregelschleife (PLL) der DE 10 2017 117 109 A1 synchronisiert die PWM-Frequenz mit der Motordrehzahl anhand der Spannungsdifferenz als induzierte Spannung und regelt somit die Spannungsdifferenz zum Abtastzeitpunkt auf Null.

Nachteilig ist hierbei jedoch, dass der beste Wirkungsgrad eines bürstenlosen Motors dann erreicht wird, wenn die induzierte Spannung, d.h. die elektromotorische Kraft (EMK) genannt, und der Phasenstrom in Phase liegen. Da der Strom in der Motorphase, d.h. der Phasenstrom, jedoch aufgrund der Induktivität der induzierten Spannung nacheilt, befindet man sich jedoch nicht im optimalen Arbeitsbereich.

Die EP 2 415 157 A2 beschreibt ein Verfahren zum Steuern einer einphasigen elektrischen Permanentmagnetmaschine, wobei das Verfahren umfasst: sequentielles Erregen und Freilaufen einer Wicklung der elektrischen Maschine, wobei die Wicklung durch eine Erregerspannung vor Nulldurchgängen der Gegen-EMK in der Wicklung um einen Vorlaufwinkel erregt wird und die Wicklung über einen Freilaufwinkel freilaufend betrieben wird; und Variieren des Vorlaufwinkels und des Freilaufwinkels als Reaktion auf Änderungen der Erregerspannung.

Die EP 2 415 158 A2 beschreibt ein Verfahren zum Steuern einer elektrischen Maschine, wobei das Verfahren umfasst: sequentielles Erregen und Freilaufen einer Wicklung der elektrischen Maschine, wobei die Wicklung vor Nulldurchgängen der Gegen-EMK um einen Vorlaufwinkel erregt wird und die Wicklung über einen Freilaufwinkel freilaufend ist; und Variieren des Vorlaufwinkels und des Freilaufwinkels in Reaktion auf Änderungen der Geschwindigkeit der elektrischen Maschine.

Durch die Verfahren der EP 2 415 157 A2 und der EP 2 415 158 A2 kann der Kommutierungswinkel vorgezogen und hierdurch die Leistung eines bürstenlosen Motors erhöht werden, welche sonst durch die Höhe der Zwischenkreisspannung begrenzt wird.

Die DE 102018128354 A1 betrifft ein Verfahren zum Bestimmen einer Rotorstellung eines BLDC-Motors und ein Verfahren zum Anfahren eines BLDC-Motors.

Die US 5345156 A betrifft ein Verfahren und eine Vorrichtung zum Betreiben eines bürstenlosen Permanentmagnetmotors bei Drehzahlen, bei denen Nulldurchgänge der Statorphasenspannungen nicht verfügbar sind, wobei die Zuführung von Statorströmen zu einer Statorphase vorübergehend unterbrochen wird, damit der Strom in der Phase Null erreichen kann, und die Nulldurchgänge der internen Motorspannung als Ersatz für die Nulldurchgänge der Gegen-EMK der Statorphase erfasst werden.

Die EP 3653782 A1 betrifft einen Wäschetrockner mit einem bürstenloser Gleichstrommotor (BLDC) sowie Batterien oder Akkumulatoren zur Energieversorgung.

Die DE 102017121829 A1 betrifft ein Verfahren zum Betreiben eines elektronisch kommutierten mehrphasigen Elektromotors, bei dem die Kommutierungszeiten sensorlos mit Hilfe eines Komparators aus den Nulldurchgängen der Gegenelektromotorischen Kraft ermittelt werden, wobei die ermittelten Kommutierungszeiten in Abhängigkeit von einer Hysterese des Komparators korrigiert werden.

Der Erfindung stellt sich das Problem, ein Verfahren zum Ansteuern eines mindestens zweiphasigen bürstenlosen Motors der eingangs beschriebenen Art bereitzustellen, so dass die Leistungsgrenze des mindestens zweiphasigen bürstenlosen Motors erhöht werden kann.

Dies soll insbesondere möglichst einfach, kostengünstig und bzw. oder flexibel umgesetzt werden können. Zumindest soll eine Alternative zu bekannten derartigen Verfahren geschaffen werden.

Erfindungsgemäß wird dieses Problem durch ein Verfahren mit den Merkmalen des Patentanspruchs 1, durch eine Ansteuerungsvorrichtung mit den Merkmalen des Patentanspruchs 3, durch einen mindestens zweiphasigen bürstenlosen Motor mit den Merkmalen des Patentanspruchs 5 sowie durch ein Haushaltsgerät mit den Merkmalen des Patentanspruchs 7 gelöst. Vorteilhafte Ausgestaltungen und Weiterbildungen der Erfindung ergeben sich aus den nachfolgenden Unteransprüchen.

Somit betrifft die Erfindung ein Verfahren zum Ansteuern eines mindestens zweiphasigen bürstenlosen Motors, vorzugsweise ohne Rotorlagesensor, mit wenigstens den Schritten:
- Bestromen von zwei Phasen, wobei die Spannung des Bestromens mittels PWM-Steuerung eingestellt wird,
- Ermitteln der induzierten Spannung einer nicht-bestromten Phase,
- Vergleichen der ermittelten induzierten Spannung mit einem vorbestimmten Sollwert der induzierten Spannung, welcher ungleich Null ist, und
- Anpassen des Kommutierungszeitpunkts, falls die Differenz zwischen der ermittelten induzierten Spannung und dem vorbestimmten Sollwert der induzierten Spannung ungleich Null ist.

Der Erfindung liegt dabei die Erkenntnis zugrunde, dass die Phasenregelschleife des geregelten Frequenzumrichters bekannter bürstenloser Motoren, wie beispielsweise in der DE 10 2017 117 109 A1 beschrieben, die PWM-Frequenz anhand der Spannungsdifferenz als induzierte Spannung mit der Motordrehzahl synchronisiert und somit die Spannungsdifferenz zum Abtastzeitpunkt auf Null regelt. Da der Phasenstrom aufgrund der Induktivität jedoch der induzierten Spannung nacheilt, wird der bürstenlose Motor auf diese Art und Weise nicht mit dem optimalen Wirkungsgrad betrieben.

Erfindungsgemäß wird daher der Kommutierungswinkel verändert und insbesondere vorgezogen, indem die Spannungsdifferenz als induzierte Spannung nicht auf Null, wie bisher bekannt, sondern auf einen von Null abweichenden vorbestimmten Sollwert der induzierten Spannung geregelt wird. Hierdurch synchronisiert die Phasenregelschleife des geregelten Frequenzumrichters die Motordrehzahl mit dem vorbestimmten Sollwert der induzierten Spannung, wodurch die PWM-Frequenz und damit auch die Leistung des Motors verändert werden. Hierdurch kann der Spielraum zum Betreiben eines mindestens zweiphasigen bürstenlosen Motors auf einfache Art und Weise erhöht bzw. erweitert werden.

Insbesondere kann durch einen vorbestimmten Sollwert der induzierten Spannung, welcher kleiner als Null ist, der Kommutierungswinkel vorgezogen und hierdurch die Leistung des bürstenlosen Motors erhöht werden. Somit kann auch bei geringer Zwischenkreisspannung, zum Beispiel bei einem akkubetriebenen bürstenlosen Motor, die volle Motorleistung erzielt werden. Zusätzlich oder alternativ kann der geregelte Frequenzumrichter kleiner in der Leistung ausgelegt werden, wodurch Kosten und bzw. oder erforderlicher Bauraum und bzw. oder der elektrische Energiebedarf reduziert werden kann bzw. können. Zusätzlich oder alternativ kann der Wirkungsgrad des bürstenlosen Motors erhöht werden.

Gemäß einem Aspekt der Erfindung ist der vorbestimmte Sollwert der induzierten Spannung kleiner als Null. Auf diese Art und Weise kann der Kommutierungswinkel vorgezogen und hierdurch die Leistung des mindestens zweiphasigen bürstenlosen Motors erhöht werden, wie bereits zuvor beschrieben.

Gemäß einem weiteren Aspekt der Erfindung ist der vorbestimmte Sollwert der induzierten Spannung größer als Null. Auf diese Art und Weise kann der Kommutierungswinkel verzögert und hierdurch die Leistung des mindestens zweiphasigen bürstenlosen Motors reduziert werden, was den Spielraum zum Betreiben des mindestens zweiphasigen bürstenlosen Motors erhöhen bzw. erweitern kann.

Gemäß einem weiteren Aspekt der Erfindung erfolgt das Ermitteln der induzierten Spannung einer nicht-bestromten Phase durch die Schritte:
- Ermitteln der Phasenspannung der nicht-bestromten Phase,
- Ermitteln einer Sternpunktspannung, und
- Bilden der Differenz zwischen der ermittelten Phasenspannung und der ermittelten Sternpunktspannung als induzierte Spannung.

Auf diese Art und Weise kann das Ermitteln der induzierten Spannung einer nicht-bestromten Phase umgesetzt werden.

Gemäß der Erfindung erfolgt das Verfahren bei Vollaussteuerung des bürstenlosen Motors. Hierdurch kann die Leistung des bürstenlosen Motors insbesondere dann erhöht werden, wenn bei bekannten bürstenlosen Motoren die maximale Leistung bereits erreicht ist.

Die vorliegende Erfindung betrifft auch eine Ansteuerungsvorrichtung zum Ansteuern eines mindestens zweiphasigen bürstenlosen Motors, vorzugsweise ohne Rotorlagesensor, vorzugsweise gemäß eines Verfahrens wie zuvor beschrieben, mit einer Steuerungseinheit, welche ausgebildet ist, zwei Phasen des mindestens zweiphasigen bürstenlosen Motors zu bestromen, wobei die Spannung des Bestromens mittels PWM-Steuerung eingestellt wird, und mit einer Abtasteinrichtung, welche ausgebildet ist, die induzierte Spannung einer nicht-bestromten Phase zu ermitteln, wobei die Steuerungseinheit ferner ausgebildet ist, die ermittelte induzierte Spannung mit einem vorbestimmten Sollwert der induzierten Spannung zu vergleichen, welche ungleich Null ist, und wobei die Steuerungseinheit ferner ausgebildet ist, den Kommutierungszeitpunkt anzupassen, falls die Differenz zwischen der ermittelten induzierten Spannung und dem vorbestimmten Sollwert der induzierten Spannung ungleich Null ist.

Hierdurch kann eine Ansteuerungsvorrichtung bereitgestellt werden, um die zuvor beschriebenen Aspekte der Erfindung bzw. um das erfindungsgemäße zuvor beschriebene Verfahren bei einem mindestens zweiphasigen bürstenlosen Motor umzusetzen.

Gemäß einem Aspekt der Erfindung ist die Abtasteinrichtung ferner ausgebildet, die Phasenspannung der nicht-bestromten Phase zu ermitteln, eine Sternpunktspannung zu ermitteln und die Differenz zwischen der ermittelten Phasenspannung und der ermittelten Sternpunktspannung als induzierte Spannung zu bilden. Auf diese Art und Weise kann das Ermitteln der induzierten Spannung einer nicht-bestromten Phase umgesetzt werden.

Die vorliegende Erfindung betrifft auch einen mindestens zweiphasigen bürstenlosen Motor, vorzugsweise ohne Rotorlagesensor, mit einer Ansteuerungsvorrichtung wie zuvor beschrieben. Hierdurch kann ein mindestens zweiphasiger bürstenloser Motor bereitgestellt werden, um die zuvor beschriebenen Aspekte der Erfindung bzw. um das erfindungsgemäße zuvor beschriebene Verfahren umzusetzen.

Die vorliegende Erfindung betrifft auch ein Haushaltsgerät mit mindestens einem mindestens zweiphasigen bürstenlosen Motor wie zuvor beschrieben. Hierdurch kann ein Haushaltsgerät bereitgestellt werden, um die zuvor beschriebenen Aspekte der Erfindung bzw. um das erfindungsgemäße zuvor beschriebene Verfahren umzusetzen.

Gemäß einem Aspekt der Erfindung weist das Haushaltsgerät einen, vorzugsweise wiederaufladbaren, elektrischen Energiespeicher auf und ist ausgebildet, mittels der gespeicherten elektrischen Energie des elektrischen Energiespeichers betrieben zu werden.

Diesem Aspekt der Erfindung liegt die Erkenntnis zugrunde, dass bei akkubetriebenen Haushaltsgeräten die Zwischenkreisspannung mit sinkender Akkuspannung ebenfalls sinkt und somit im unteren Spannungsbereich des Akkus womöglich die volle Leistung des bürstenlosen Motors nicht mehr erreicht werden kann. Gerade in einer derartigen Situation die Leistung des bürstenlosen Motors erfindungsgemäß wieder zu erhöhen, kann es dem Benutzer ermöglichen, das Haushaltsgerät auch bei sinkender Akkuspannung mit ausreichender Leistung zu betreiben, um das Haushaltsgerät bestimmungsgemäß verwenden zu können.

Ein Ausführungsbeispiel der Erfindung ist in den Zeichnungen rein schematisch dargestellt und wird nachfolgend näher beschrieben. Es zeigt
- Figur 1: Schaltung eines bekannten bürstenlosen Motors;
- Figur 2: Verläufe der Phasenspannungen der drei Phasen des bürstenlosen Motors der Figur 1; und

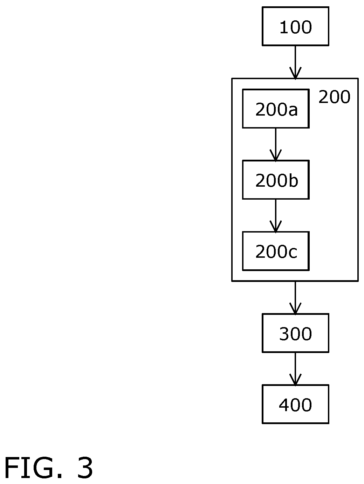

- Figur 3: ein Ablaufdiagramm eines erfindungsgemäßen Verfahrens.

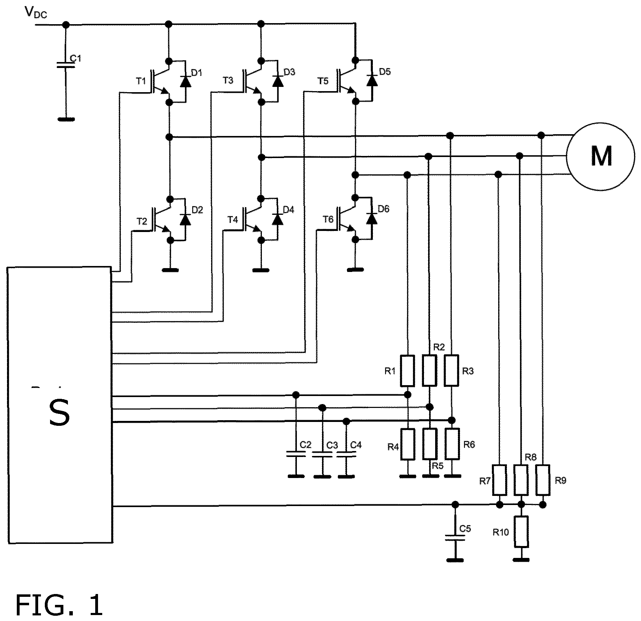

Figur 1 zeigt eine Schaltung eines bekannten bürstenlosen Motors M. Der bürstenlose Motor M, kurz BLDC-Motor M, wird über eine Steuerungseinheit S in Form eines geregelten Frequenzumrichters S angesteuert bzw. betrieben. Aus einer Gleichspannung V_{DC} als Zwischenkreisspannung V_{DC} wird über eine B6-Brücke mit sechs Schaltelementen (MOSFETs oder Transistoren) T1-T6 und sechs Dioden D1-D6 ein dreiphasiges Drehfeld an den BLDC-Motor M gelegt. Hierdurch wird eine Rotation eines Rotors (nicht dargestellt) des BLDC-Motors M im Betrieb bewirkt.

Damit das Drehfeld, welches auf den Stator (nicht dargestellt) des BLDC-Motors M gegeben wird, passend zur Rotorlage ist, muss die Rotorlage bestimmt werden. In der Vergangenheit wurde dies über einen Sensor am BLDC-Motor M getan. Mit dem Aufkommen der sensorlosen Regelung wurde der Sensor durch die Messung elektrischer Größen in Kombination mit einem Software-Motormodell seitens der Steuerungseinheit S ersetzt. Zu diesem Zweck wurden die Phasenspannungen U_{Phase} der drei Phasen U, V, W und auch die Sternpunktspannung gemessen. Die Sternpunktspannung kann entweder am Sternpunkt des BLDC-Motors M gemessen oder über einen "künstlichen Sternpunkt" nachgestellt und gemessen werden. Die Schaltung der ohmschen Widerstände R8-R10 und des Kondensators C5 stellt den künstlichen Sternpunkt dar. Bei einem BLDC-Motor M mit Dreieckschaltung wird üblicherweise nur mit dem künstlichen Sternpunkt gearbeitet.

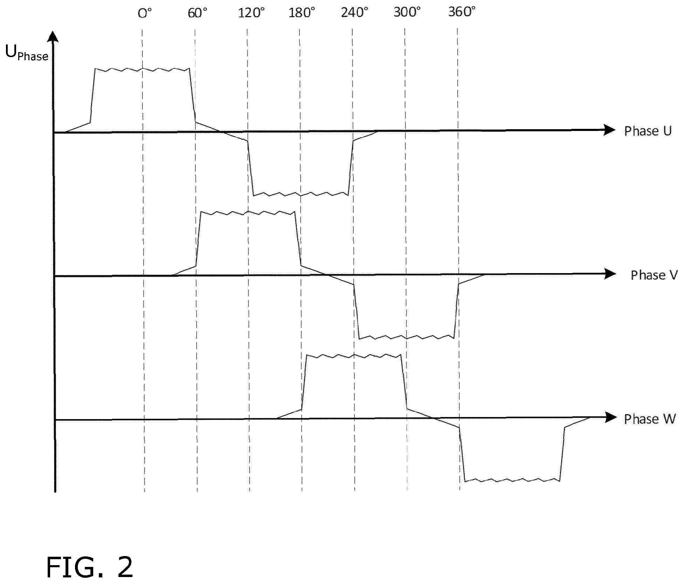

Figur 2 zeigt die Verläufe der Phasenspannungen U_{Phase} der drei Phasen U, V, W des bürstenlosen Motors M der Figur 1. Wie dem zeitlichen Verlauf der Phasenspannung U_{Phase} der Phase U zu entnehmen ist, so wird die Phase U 120° (zwei Sektoren) lang mit einer positiven Spannung aktiv beaufschlagt. Einen Sektor lang ist die Phase U stromlos. In dieser Zeit kann die induzierte Spannung EMK der Phase U gemessen werden, welche auch als elektromotorische Kraft (EMK) bezeichnet wird.

Die Nulllinie bei der Phasenspannung U_{Phase} ist die Sternpunktspannung. Dort, wo die Phasenspannung U_{Phase} die Sternpunktspannung kreuzt, liegt ein sogenannter Nulldurchgang der jeweiligen Phasenspannung U_{Phase} vor. Dieser Zeitpunkt des Nulldurchgangs der Phasenspannung U_{Phase} ist der Moment, wo der Stator und der Rotor zueinander ausgerichtet sind. Auf diese Nulldurchgänge wird gemessen. Somit kann in der Phase U bei einem einpoligen BLDC-Motor M zwei Mal ein Nulldurchgang während einer mechanischen Umdrehung (0° bis 360°) gemessen werden. Misst man in allen drei Phasen U, V, W den Strom, so kann während einer mechanischen Umdrehung sechs Mal die Rotorlage bestimmt werden. Auf diesem Prinzip bauen alle Steuerungseinheiten S von herkömmlichen BLDC-Motoren M auf.

Bei einem derartigen bekannten BLDC-Motor M kann der optimale Wirkungsgrad, welcher vorliegt, wenn die induzierte Spannung EMK einer der drei Phasen U, V, W in Phase mit dem Phasenstrom dieser Phasen U, V, W liegt, nicht erreicht werden, da der Phasenstrom aufgrund der Induktivität stets der induzierten Spannung EMK nacheilt. Somit befindet sich ein derartiger bekannter BLDC-Motor M nie im optimalen Arbeitsbereich.

Erfindungsgemäß wird daher ein Verfahren seitens des BLDC-Motors M ausgeführt, bei welchem ein Bestromen 100 von zwei Phasen U, V, W der insgesamt drei Phasen U, V, W erfolgt. Die Spannung U_{Phase} des Bestromens 100 wird dabei mittels PWM-Steuerung der Steuerungseinheit S als geregelter Frequenzumrichter S eingestellt.

Ferner erfolgt ein Ermitteln 200 einer induzierten Spannung EMK derjenigen der drei Phasen U, V, W, welche zu diesem Zeitpunkt nicht bestromt ist. Hierzu erfolgt ein Ermitteln 200a der Phasenspannung U_{Phase} der nicht-bestromten Phase U, V, W, ein Ermitteln 200b einer Sternpunktspannung und ein Bilden 200c der Differenz zwischen der ermittelten Phasenspannung U_{Phase} und der ermittelten Sternpunktspannung als induzierte Spannung EMK.

Anschließend erfolgt ein Vergleichen 300 der ermittelten induzierten Spannung EMK mit einem vorbestimmten Sollwert der induzierten Spannung EMK_{Ref}, welche kleiner als Null ist. In Reaktion hierauf erfolgt ein Anpassen 400 des Kommutierungszeitpunkts, falls die Differenz zwischen der ermittelten induzierten Spannung EMK und dem vorbestimmten Sollwert der induzierten Spannung EMK_{Ref} ungleich Null ist, d.h. falls die ermittelte induzierte Spannung EMK nicht dem vorbestimmten Sollwert der induzierten Spannung EMK_{Ref} entspricht.

Die PWM-Frequenz wird nicht angepasst, sondern der Zeitpunkt, wann ein Sektor bestromt wird. Die PWM-Frequenz ist erstmal konstant. Durch einen anderen Kommutierungszeitpunkt erhöht oder verringert sich die Leistung. Als Folge dessen verringert oder erhöht sich auch die Drehzahl und somit die PWM-Frequenz. Aber im ersten Schritt wird nur der Zeitpunkt des Ein-und Ausschaltens verändert bzw. wann der Übergang von einem Sektor in den nächsten erfolgt.

Erfindungsgemäß wird somit, insbesondere bei Vollaussteuerung, ein vorbestimmter Sollwert der induzierten Spannung EMK_{Ref} für die induzierte Spannung EMK zwischen Phasenspannung U_{Phase} und Sternpunktspannung vorgegeben. Hierdurch wird der Kommutierungswinkel vorgezogen, da die Phasenregelschleife (PLL) des geregelten Frequenzumrichters S mit der Motordrehzahl synchronisiert ist. Durch das Vorziehen des Kommutierungswinkels kann somit die Leistung des erfindungsgemäßen BLDC-Motors M weiter erhöht werden, bis zu einem gewissen Punkt, selbst wenn der BLDC-Motor M bereits in der Vollaussteuerung betrieben wird. Zur Synchronisierung auf einem negativen Nulldurchgang wird somit der vorbestimmte Sollwert der induzierten Spannung EMK_{Ref} negativ gewählt, damit der Kommutierungswinkel vorgezogen werden kann.

Würde der vorbestimmte Sollwert der induzierten Spannung EMK_{Ref} größer als Null gewählt werden, so könnte hierdurch der Kommutierungswinkel verzögert und damit die Leistung des erfindungsgemäßen BLDC-Motors M auf diese Art und Weise reduziert werden. In diesem Fall würde zur Synchronisierung auf einem positiven Nulldurchgang der vorbestimmte Sollwert der induzierten Spannung EMK_{Ref} positiv gewählt werden.

Diese erfindungsgemäße sensorlose Regelung beinhaltet somit einen Regelkreis, welcher die Grundwelle der Umrichterspannung des geregelten Frequenzumrichters S in eine vorgegebenen Phase zur induzierten Spannung EMK des BLDC-Motors M setzt. Bisher werden bei bekannten BLDC-Motoren M die Umrichterspannung des geregelten Frequenzumrichters S und die induzierte Spannung EMK in Phase gesetzt, indem der Sollwert der induzierten Spannung EMK_{Ref} in der Phasenregelschleife des geregelten Frequenzumrichters S zu Null gesetzt wird. Durch Variieren des Sollwerts der induzierten Spannung EMK_{Ref} als Sollwert der Phasenregelschleife kann erfindungsgemäß eine Phasenverschiebung zwischen Umrichterspannung des geregelten Frequenzumrichters S und induzierter Spannung EMK erzeugt werden. Hierdurch kann eine Erweiterung der Ausgangsleistung des geregelten Frequenzumrichters S erzielt werden.

### Bezugszeichenliste (Bestandteil der Beschreibung)

- C1-C5: Kondensatoren
- D1-D6: Dioden der B6-Brücke
- T1-T6: Transistoren der B6-Brücke
- R1-R10: ohmsche Widerstände
- V_{DC}: Gleichspannung

- U: Phase
- V: Phase
- W: Phase

- U_{Phase}: Phasenspannung; Zwischenkreisspannung
- EMK: induzierte Spannung; elektromotorische Kraft
- EMK_{Ref}: Sollwert der induzierten Spannung EMK

- M: (dreiphasiger) bürstenloser Motor; BLDC-Motor
- S: Steuerungseinheit; Rechner; geregelter Frequenzumrichter

- 100: Bestromen von zwei Phasen U, V, W
- 200: Ermitteln der induzierten Spannung EMK einer nicht-bestromten Phase U, V, W
- 200a: Ermitteln der Phasenspannung U_{Phase} der nicht-bestromten Phase U, V, W
- 200b: Ermitteln einer Sternpunktspannung
- 200c: Bilden der Differenz zwischen ermittelter Phasenspannung U_{Phase} und ermittelter Sternpunktspannung als induzierte Spannung EMK
- 300: Vergleichen der ermittelten induzierten Spannung EMK mit einem vorbestimmten Sollwert der induzierten Spannung EMK_{Ref}
- 400: Anpassen des Kommutierungszeitpunkts

## Patentansprüche

1. Verfahren zum Ansteuern eines mindestens zweiphasigen bürstenlosen Motors (M), vorzugsweise ohne Rotorlagesensor, mit wenigstens den Schritten:
• Bestromen (100) von zwei Phasen (U, V, W), wobei die Spannung (U_{Phase}) des Bestromens (100) mittels PWM-Steuerung eingestellt wird,
• Ermitteln (200) der induzierten Spannung (EMK) einer nicht-bestromten Phase (U, V, W),
• Vergleichen (300) der ermittelten induzierten Spannung (EMK) mit einem vorbestimmten Sollwert der induzierten Spannung (EMK_{Ref}), welche ungleich Null ist, und
• Anpassen (400) des Kommutierungszeitpunkts, falls die Differenz zwischen der ermittelten induzierten Spannung (EMK) und dem vorbestimmten Sollwert der induzierten Spannung (EMK_{Ref}) ungleich Null ist, wobei
• der Kommutierungszeitpunkt vorgezogen wird, um die Leistung des bürstenlosen Motors (M) zu erhöhen, wenn der vorbestimmte Sollwert der induzierten Spannung (EM-K_{Ref}) kleiner als Null ist, und
• der Kommutierungszeitpunkt verzögert wird, um die Leistung des bürstenlosen Motors (M) zu verringern, wenn der vorbestimmte Sollwert der induzierten Spannung (EM-K_{Ref}) größer als Null ist,
**dadurch gekennzeichnet, dass** das Verfahren bei Vollaussteuerung des bürstenlosen Motors (M) erfolgt.

2. Verfahren nach Anspruch 1, wobei das Ermitteln (200) der induzierten Spannung (EMK) einer nicht-bestromten Phase (U, V, W) durch die Schritte erfolgt:
• Ermitteln (200a) der Phasenspannung (U_{Phase}) der nicht-bestromten Phase (U, V, W),
• Ermitteln (200b) einer Sternpunktspannung und
• Bilden (200c) der Differenz zwischen der ermittelten Phasenspannung (U_{Phase}) und der ermittelten Sternpunktspannung als induzierte Spannung (EMK).

3. Ansteuerungsvorrichtung zum Ansteuern eines mindestens zweiphasigen bürstenlosen Motors (M), vorzugsweise ohne Rotorlagesensor, gemäß einem Verfahren nach einem der vorangehenden Ansprüche,
mit einer Steuerungseinheit (S), welche ausgebildet ist, zwei Phasen (U, V, W) des mindestens zweiphasigen bürstenlosen Motors (M) zu bestromen, wobei die Spannung (U_{P-hase}) des Bestromens (100) mittels PWM-Steuerung eingestellt wird, und
mit einer Abtasteinrichtung, welche ausgebildet ist, die induzierte Spannung (EMK) einer nicht-bestromten Phase (U, V, W) zu ermitteln,
**dadurch gekennzeichnet, dass** die Steuerungseinheit (S) ferner ausgebildet ist, bei Vollaussteuerung des bürstenlosen Motors (M)
die ermittelte induzierte Spannung (EMK) mit einem vorbestimmten Sollwert der induzierten Spannung (EMK_{Ref}) zu vergleichen, welcher ungleich Null ist, und
den Kommutierungszeitpunkt anzupassen, falls die Differenz zwischen der ermittelten induzierten Spannung (EMK) und dem vorbestimmten Sollwert der induzierten Spannung (EMKRef) ungleich Null ist, wobei
der Kommutierungszeitpunkt vorgezogen wird, um die Leistung des bürstenlosen Mo-tors (M) zu erhöhen, wenn der vorbestimmte Sollwert der induzierten Spannung (EM-KRef) kleiner als Null ist, und
der Kommutierungszeitpunkt verzögert wird, um die Leistung des bürstenlosen Motors (M) zu verringern, wenn der vorbestimmte Sollwert der induzierten Spannung (EMKRef) größer als Null ist.

4. Ansteuerungsvorrichtung nach Anspruch 3, **dadurch gekennzeichnet, dass**
die Abtasteinrichtung ferner ausgebildet ist,
die Phasenspannung (U_{Phase}) der nicht-bestromten Phase (U, V, W) zu ermitteln,
eine Sternpunktspannung zu ermitteln, und
die Differenz zwischen der ermittelten Phasenspannung (U_{Phase}) und der ermittelten Sternpunktspannung als induzierte Spannung (EMK) zu bilden.

5. Mindestens zweiphasiger bürstenloser Motor (M), vorzugsweise ohne Rotorlagesensor, mit einer Ansteuerungsvorrichtung nach Anspruch 3 oder 4.

6. Haushaltsgerät mit mindestens einem Motor (M) nach Anspruch 5.

7. Haushaltsgerät nach Anspruch 6, **dadurch gekennzeichnet, dass**
das Haushaltsgerät einen, vorzugsweise wiederaufladbaren, elektrischen Energiespeicher aufweist und ausgebildet ist, mittels der gespeicherten elektrischen Energie des elektrischen Energiespeichers betrieben zu werden.

## Claims

1. Method for controlling an at least two-phase brushless motor (M), preferably without a rotor position sensor, comprising at least the steps of:
• energising (100) two phases (U, V, W), wherein the voltage (U_{Phase}) of the energising (100) is adjusted by means of PWM control,
• identifying (200) the induced voltage (EMK) of a non-energised phase (U, V, W),
• comparing (300) the identified induced voltage (EMK) with a predetermined target value of the induced voltage (EMK_{Ref}) which is not equal to zero, and
• adapting (400) the commutation instant if the difference between the identified induced voltage (EMK) and the predetermined target value of the induced voltage (EMK_{Ref}) is not equal to zero, wherein
• the commutation instant is brought forward to increase the power of the brushless motor (M) when the predetermined target value of the induced voltage (EMK_{Ref}) is less than zero, and
• the commutation instant is delayed to reduce the power of the brushless motor (M) when the predetermined target value of the induced voltage (EMK_{Ref}) is more than zero,
**characterised in that** the method is carried out when the brushless motor (M) is in full drive.

2. Method according to claim 1, **wherein** identifying (200) the induced voltage (EMK) of a non-energised phase (U, V, W) is carried out by the steps of:
• identifying (200a) the phase voltage (U_{Phase}) of the non-energised phase (U, V, W),
• identifying (200b) a neutral point voltage; and
• calculating (200c) the difference between the identified phase voltage (U_{Phase}) and the identified neutral point voltage as the induced voltage (EMK).

3. Control device for controlling an at least two-phase brushless motor (M), preferably without a rotor position sensor, in accordance with a method according to any of the preceding claims,
comprising a control unit (S) which is designed to energise two phases (U, V, W) of the at least two-phase brushless motor (M), wherein the voltage (U_{Phase}) of the energising (100) is adjusted by means of PWM control, and
comprising a scanning apparatus which is designed to identify the induced voltage (EMK) of a non-energised phase (U, V, W),
**characterised in that** the control unit (S) is further designed, at full drive of the brushless motor (M)
to compare the identified induced voltage (EMK) with a predetermined target value of the induced voltage (EMK_{Ref}) which is not equal to zero, and
to adapt the commutation instant if the difference between the identified induced voltage (EMK) and the predetermined target value of the induced voltage (EMKRef) is not equal to zero, wherein
the commutation instant is brought forward to increase the power of the brushless motor (M) when the predetermined target value of the induced voltage (EM-KRef) is less than zero, and
the commutation instant is delayed to reduce the power of the brushless motor (M) when the predetermined target value of the induced voltage (EMKRef) is more than zero.

4. Control device according to claim 3, **characterised in that**
the scanning apparatus is further designed
to identify the phase voltage (U_{Phase}) of the non-energised phase (U, V, W),
to identify a neutral point voltage; and
to calculate the difference between the identified phase voltage (U_{Phase}) and the identified neutral point voltage as the induced voltage (EMK).

5. At least two-phase brushless motor (M), preferably without a rotor position sensor, comprising a control device according to claim 3 or 4.

6. Domestic appliance comprising at least one motor (M) according to claim 5.

7. Domestic appliance according to claim 6, **characterised in that**
the domestic appliance comprises a preferably rechargeable electrical energy store and is designed to be operated by means of the stored electrical energy of the electrical energy store.

## Revendications

1. Procédé pour la commande d'amorçage d'un moteur sans balais (M) à au moins deux phases, de préférence sans capteur de position de rotor, comportant au moins les étapes consistant à :
• alimenter électriquement (100) deux phases (U, V, W), dans lequel la tension (U_{Phase}) de l'alimentation électrique (100) est réglée au moyen d'une commande à modulation de largeur d'impulsion,
• déterminer (200) une tension induite (EMK) d'une phase (U, V, W) non alimentée électriquement,
• comparer (300) la tension induite (EMK) déterminée avec une valeur de consigne prédéfinie de la tension induite (EMK_{Ref}), laquelle n'est pas égale à zéro, et
• adapter (400) le moment de commutation si la différence entre la tension induite (EMK) déterminée et la valeur de consigne prédéfinie de la tension induite (EMK_{Ref}) n'est pas égale à zéro, dans lequel
• le moment de commutation est anticipé afin d'augmenter la puissance du moteur sans balais (M) lorsque la valeur de consigne prédéterminée de la tension induite (EMK_{Ref}) est inférieure à zéro, et
• le moment de commutation est retardé afin de réduire la puissance du moteur sans balais (M) lorsque la valeur de consigne prédéterminée de la tension induite (EMK_{Ref}) est supérieure à zéro,
**caractérisé en ce que** le procédé est effectué avec le moteur sans balais (M) à pleine puissance.

2. Procédé selon la revendication 1, **dans lequel** la détermination (200) de la tension induite (EMK) d'une phase (U, V, W) non alimentée électriquement est effectuée par les étapes consistant à :
• déterminer (200a) la tension de phase (U_{Phase}) de la phase (U, V, W) non alimentée électriquement,
• déterminer (200b) une tension de point neutre, et
• former (200c) la différence entre la tension de phase (U_{Phase}) déterminée et la tension de point neutre déterminée en tant que tension induite (EMK).

3. Dispositif de commande d'amorçage pour la commande d'amorçage d'un moteur sans balais (M) à au moins deux phases, de préférence sans capteur de position de rotor, conformément à un procédé selon l'une des revendications précédentes,
comportant une unité de commande (S) configurée pour alimenter électriquement deux phases (U, V, W) du moteur sans balais (M) à au moins deux phases, dans lequel la tension (U_{Phase}) de l'alimentation électrique (100) est réglée au moyen d'une commande à modulation de largeur d'impulsion, et
comportant un élément de balayage configuré pour déterminer la tension induite (EMK) d'une phase (U, V, W) non alimentée électriquement,
**caractérisé en ce que** l'unité de commande (S) est en outre configurée pour, lorsque le moteur sans balais (M) est à pleine puissance,
comparer la tension induite (EMK) déterminée avec une valeur de consigne prédéfinie de la tension induite (EMK_{Ref}), laquelle n'est pas égale à zéro, et
adapter le moment de commutation si la différence entre la tension induite (EMK) déterminée et la valeur de consigne prédéfinie de la tension induite (EMKRef) n'est pas égale à zéro, dans lequel
le moment de commutation est anticipé afin d'augmenter la puissance du moteur sans balais (M) lorsque la valeur de consigne prédéterminée de la tension induite (EM-KRef) est inférieure à zéro, et
le moment de commutation est retardé afin de réduire la puissance du moteur sans balais (M) lorsque la valeur de consigne prédéterminée de la tension induite (EMKRef) est supérieure à zéro.

4. Dispositif de commande d'amorçage selon la revendication 3,
**caractérisé en ce que**
l'élément de balayage est en outre configuré pour
déterminer la tension de phase (U_{Phase}) de la phase (U, V, W) non alimentée électriquement,
déterminer la tension de point neutre, et
former la différence entre la tension de phase (U_{Phase}) déterminée et la tension de point neutre déterminée en tant que tension induite (EMK).

5. Moteur sans balais (M) à au moins deux phases, de préférence sans capteur de position de rotor, comportant un dispositif de commande d'amorçage selon la revendication 3 ou 4.

6. Appareil électroménager comportant au moins un moteur (M) selon la revendication 5.

7. Appareil électroménager selon la revendication 6, **caractérisé en ce que**
l'élément électroménager présente un accumulateur d'énergie électrique, de préférence rechargeable, et est configuré pour fonctionner au moyen de l'énergie électrique accumulée de l'accumulateur d'énergie électrique.
